# EUROPÄISCHE PATENTANMELDUNG

(11) **EP 1 288 552 A2**
(43) Veröffentlichungstag der Anmeldung: **05.03.2003**
(21) Anmeldenummer: 02012828.6
(22) Anmeldetag: 10.06.2002
(51) Int. Cl.: F16L 11/08

(54) **Verstärkter, flexibler Schlauch, insbesondere Brauseschlauch**

(30) Priorität: 18.08.2001 DE 20113705 U
(71) Anmelder: VOHRAN Patentverwertungs-GmbH, 61462 Königstein (DE)
(72) Erfinder: Vohrer, Christoph, 61462 Königstein (DE)
(74) Vertreter: Schubert, Siegmar, Dipl.-Ing.

(57) **Zusammenfassung**

In einem verstärkten, flexiblen Schlauch, insbesondere Brauseschlauch, mit einem dünnwandigen, mit Verstärkungen versehenen Innenschlauch, mindestens einem äußeren Außenschlauch, mindestens einer Stützwendel zwischen Innenschlauch und Außenschlauch sowie mit in Achsrichtung des Schlauchs verlaufenden Verstärkungsbändern radial außerhalb der Stützwendel sind wobei die Verstärkungsbänder mit benachbarten Teilen des Schlauchs verbunden. Damit der Schlauch bei einem im wesentlichen vollflächigen hochglänzend metallisierten Aussehen leicht und hochflexibel ist und auch bei häufiger Faltenbildung nicht ermüdet oder reißt, bestehen die Verstärkungsbänder (6) aus einer im wesentlichen nicht dehnbaren, hochglänzend metallisierten Folie. Sie sind in dem Bereich radial zwischen einer Oberseite der Stützwendel und unterhalb einer äußeren Oberfläche des äußeren Außenschlauchs (4) angeordnet.

## Beschreibung

Die Erfindung betrifft einen verstärkten, flexiblen Schlauch, insbesondere Brauseschlauch nach dem Oberbegriff des Anspruchs 1.

Bei einem derartigen bekannten Schlauch ist auf einem dünnwandigen, mit Verstärkungen versehenen Innenschlauch ein aus thermoplastischem bzw. elastomerem Material bestehender Außenschlauch aufgebracht. Die Verstärkungen sind mit dem Innenschlauch mittels eines wärmeaktivierbaren Klebers verbunden (EP 0 099 999 B1). Um den Innenschlauch so zu verstärken, daß ein auf diesem aufbauender, druckfester, verstärkter Schlauch leicht und flexibel bleibt, aber auch besonders widerstandsfähig bewehrt sein kann, werden auf der Stützwendel in dessen Achsrichtung verlaufende, mit Textilfäden versehene Verstärkungsbändchen aus einem wärmeaktivierbaren Kleber oder einen mit dem Kleber beschichteten Kunststoff als geschlossene Lage aufgebracht. Diese Bändchen, die in der vorliegenden Anmeldung auch als Verstärkungsbänder oder kurz als Bänder bezeichnet werden, gestatten ohne weitere Haftmittel eine sichere Verbindung insbesondere zwischen einer Stützwendel auf dem Innenschlauch und dem Außenschlauch. Die Bändchen bzw. Bänder bewirken, daß der Außenschlauch eines solchen sehr leichten und flexiblen Schlauchs so verstärkt ist, daß er auch bei häufigem Biegewechseln nicht reißt. Nachteilig ist jedoch, daß mit diesen Bändchen bzw. Bändern keine hochglänzende Metallisierung der Oberfläche des Schlauches erzielt werden kann, die im Bad- oder Sanitärbereich häufig gewünscht wird.

Dementsprechend hat man versucht, verschiedenen Ausführungsformen derartiger Schläuche ein metallisches Aussehen zu verleihen. Diese Versuche konnten jedoch bisher nicht voll befriedigen:

So ist bei einem flexiblen bewehrten Kunststoffschlauch mit einem mit axialen Verstärkungsfäden versehenen Innen- und einem Außenschlauch aus plastomerem oder elastomerem Material und einem zwischen Innen- und Außenschlauch wendelförmig mit axialem Abstand verlaufenden Verstärkungsband aus einem relativ hartem Material bekannt, daß das Verstärkungsband mit einer Ummantelung aus einem relativ weichen plastomeren oder elastomeren Material versehen ist, die das Verstärkungsband umschließt (DE 30 17 326 C2). Dieses Verstärkungsband kann eine metallisierte Oberfläche aufweisen. In dem Zwischenraum zwischen der Wendel dieses Verstärkungsbands ist jedoch der Innenschlauch zu sehen, der nicht metallisiert ist, so daß die metallisierte Oberfläche unterbrochen ist.

Hinsichtlich des metallisierten Gesamteindrucks ähnlich unvollkommen ist ein weiterer zum Stand der Technik gehörender verstärkter Schlauch, bestehend aus einem Innen- und einem Außenschlauch aus thermoplastischem bzw. elastomerem Material und einer Drahtwendel, die sich in einem wendelförmigen Hohlraum zwischen dem Innen- und Außenschlauch befindet (DE 22 61 126 B1). Dabei ist zwischen die Drahtwendel und parallel zu ihr ein Band aus relativ hartem thermoplastischem bzw. elastomerem Material gewickelt, welches den wendelförmigen Hohlraum bildet. Diesem Band wurde in der Praxis ein metallisiertes Aussehen verliehen. Dabei ist der metallische Gesamteindruck durch den mit der Drahtwendel nicht vollständig ausgefüllten wendelförmigen Hohlraum zwischen Innen- und Außenschlauch durchbrochen.

Ein im wesentlichen nicht unterbrochenes metallisches Aussehen kann ein weiterer zum Stand der Technik gehörender Schlauch, insbesondere Brauseschlauch, mit einem Innenschlauch und einem darüber angeordneten Außenschlauch sowie einer Einfärbung im Bereich zwischen Innenschlauch und Außenschlauch aufweisen (DE 195 11 216 A1), wobei die Außenseite des Innenschlauchs und/oder die Innenseite des Außenschlauchs unmittelbar mit Farbe versehen ist. Auch dieser doppelwandige Schlauch kann mit einer Bewehrung, insbesondere in Form von in den Innenschlauch eingebetteten Verstärkungsfäden versehen sein. - Wenngleich dieser doppelwandige Schlauch ein geschlossenes metallisches Aussehen aufweist, so ist dieses insofern nicht immer befriedigend, weil die metallische Farbschicht stumpf erscheint. Hinzu kommt, daß dieser Schlauch wenig flexibel ist, damit die Farbschicht bei Biegung möglichst wenig gedehnt oder gestaucht wird, um nicht zerstört zu werden.

Diese Nachteile gelten auch für einen äußerlich sehr ähnlichen Sanitärschlauch mit einer eingefärbten und/oder metallisierten Oberfläche, bei dem als Träger für die Farbe und/oder die Metallisierung mindestens eine Heißprägefolie dient, die mit einer mindestens teilweise nach außen sichtbaren Außenseite eines Schlauchs verbunden ist (EP 0 685 676 A2). Der Brauseschlauch besteht aus einem Innenschlauch, auf den Bänder oder Streifen aus einer weichen Heißprägefolie, bestehend aus einer Kleberschicht mit metallisierter Oberfläche, achsparallel oder wendelförmig aufgeklebt werden, sowie einem Außenschlauch, der als Schutzschicht auf dem Innenschlauch und die Bänder aufextrudiert wird. Die auf die Schlauchaußenseite aufgeprägte Heißprägefolie soll mit ihrer eingefärbten und/oder metallisierten Schicht Bewegungen des Schlauches, insbesondere Dehnungen und Stauchungen, mitmachen, ohne Risse oder Runzeln zu zeigen. Die Heißprägefolienfläche kann im einzelnen in Form von vier Bändern, die jeweils breiter als ein Viertel des Außenumfangs des Schlauchs sind, unter gegenseitiger Überlappung der Bänder vollflächig gebildet werden. - Bei diesem Sanitärschlauch ist in der Regel ebenfalls nur eine stumpfmetallische Oberfläche realisierbar. Die Bänder aus weicher Heißprägefolie tragen wenig zur Festigkeit des Schlauchaufbaus bei.

Der vorliegenden Erfindung liegt daher die Aufgabe zugrunde, einen verstärkten, flexiblen Schlauch so weiterzubilden, daß dieser in leichter Ausführung und hochflexibel auch bei häufiger Faltenbildung nicht ermüdet oder reißt und gleichwohl im wesentlichen vollflächig ein hochglänzend metallisiertes Aussehen aufweist.

Diese Aufgabe ist durch den verstärkten, flexiblen Schlauch mit den im Anspruch 1 angegebenen Merkmalen gelöst.

Mit den Verstärkungsbändern aus einer im wesentlichen nicht dehnbaren hochglänzend metallisierten Folie in der angegebenen Konfiguration werden nicht nur die Festigkeits- bzw. Biegeeigenschaften des Schlauchs so verbessert, daß dieser auch bei häufiger Faltenbildung nicht ermüdet und reißt, sondern es wird darüber hinaus ein ästhetisch besonders ansprechendes Aussehen erzielt, weil mit den hochglänzend metallisierten Verstärkungsbändern ein praktisch ganzflächiger hochglänzender Chromeffekt des Schlauchs realisierbar ist. Der gesamte Schlauchaufbau ist leicht und ermöglicht eine hohe Flexibilität des Schlauchs. Die guten mechanischen Eigenschaften des Schlauchs und dessen hochglänzend metallischer Eindruck gehen wesentlich auf die Materialauswahl für die Verstärkungsbänder und deren Metallisierbarkeit zurück. Dafür bestehen die Verstärkungsbänder gemäß Anspruch 2 besonders vorteilhaft aus Polyester, und zwar mit einer Zugfestigkeit wie sie in Anspruch 13 für bestimmte Dimensionen des Verstärkungsbandes definiert ist.

Eine für die Herstellung der Verstärkungsbänder verwendete Kunststoffolie wie die Polyesterfolie zeichnet sich dadurch aus, daß sie in Längsrichtung zwar kaum dehnbar, in ihren Biege- oder Falteigenschaften jedoch sehr flexibel ist, wodurch sie häufigen Biegewechseln standhält. Die Folie ist vorzugsweise durch Bedampfen hochglänzend metallisiert.

Die Folie bzw. die aus ihr geformten Verstärkungsbänder werden zweckmäßig nach den Ansprüchen 3 und 4 beidseitig mit einem transparenten Lack oder Kleber versehen, um die Metallisierung der Folie zu schützen und eine Haftung zwischen den Elementen des Schlauchs, insbesondere der Stützwendel und dem Außenschlauch zu erzielen, die mit den Verstärkungsbändern fest verbunden sein sollen.

Zum Schutz der metallisierten Verstärkungsbänder und zur Verbesserung der Haftung können diese nach Anspruch 5 auch mit PVC ummantelt sein.

Die Verstärkungsbänder sind fertigungsgünstig nur auf einer Seite metallisch glänzend beschichtet und sind so auf einem Grundschlauch aufzubringen, daß die beschichtete, glänzende Seite nach außen weist.

Als Grundschlauch wird derjenige Teil des gesamten Schlauchaufbaus bezeichnet, der sich radial unterhalb der Verstärkungsbänder bzw. mindestens eines Außenschlauchs befindet, in dem die Verstärkungsbänder eingebettet sein können. Der Grundschlauch umfaßt einen dünnwandigen, mit Verstärkung versehenen Innenschlauch, der zumindest eine Stützwendel, in der Regel aus einem Kunststoffband mit einem rechteckigen Querschnitt, trägt. Im Bedarfsfall kann in dem wendelförmigen Raum zwischen der Stützwendel eine ebenfalls wendelförmige Drahtwendel angeordnet sein. Es kann aber auch genügen, daß die Stützwendel selbst aus einem relativ harten Material besteht.

Bei diesem Aufbau des Grundschlauchs sind die Verstärkungsbänder gemäß Anspruch 6 zwischen der Stützwendel und einer inneren Oberfläche des Außenschlauchs angeordnet und mit diesen verklebt.

Wenn in diesem Fall zwischen den in Längsrichtung verlaufenden Verstärkungsbändern nach Anspruch 10 Lücken verbleiben, kann in dem Bereich der Lücken ein direkter Verbund zwischen der Stützwendel und dem Außenschlauch hergestellt werden, der die Haftung der Verstärkungsbänder zu der Stützwendel und dem Außenschlauch unterstützt.

Statt dessen können aber auch die Verstärkungsbänder nach Anspruch 7 zwischen dem ersten Außenschlauch und einem zweiten Außenschlauch radial außerhalb des ersten Außenschlauchs angeordnet und mit diesen verbunden sein.

Eine weitere Variante des verstärkten, flexiblen Schlauchs besteht nach Anspruch 8 darin, daß die Verstärkungsbänder in den einstückigen Außenschlauch eingebettet sind. Insbesondere bei der letzteren Ausführungsform kann die Oberfläche des Außenschlauchs nach Anspruch 9 zur Fertigungsvereinfachung und aus ästhetischen Gestaltungsgründen prismatisch mit mehreren ebenen Außenflächen ausgeformt sein, parallel zu denen die Verstärkungsbänder plan ausgerichtet sind. Die Verstärkungsbänder brauchen also nicht in verhältnismäßig aufwendiger Weise entsprechend der Krümmung des Außenumfangs, insbesondere eines zylindrischen Außenschlauchs, gekrümmt zu sein.

Die Verstärkungsbänder können zur Herstellung eines geschlossenen metallisch glänzenden Eindrucks in Längsrichtung verlaufend auf Stoß aneinander gesetzt sein. Dabei können sich die Verstärkungsbänder am Rand bzw. Stoß überlappen.

Vorzugsweise werden zum Aufbau des verstärkten, flexiblen Schlauchs mit dem typischen Durchmesser eines Brauseschlauchs Verstärkungsbänder der angegebenen Art verwendet, die 0,05 bis 0,1 mm dick und ca. 3 bis 6 mm breit sind.

Die Erfindung und der Grundschlauch, auf den sich die Erfindung erstreckt, werden im folgenden anhand einer Zeichnung mit sieben Figuren erläutert, woraus sich weitere Einzelheiten der Erfindung ergeben können.

Es zeigt:
- Figur 1: im Längsschnitt eine erste Ausführungsform eines Grundschlauchs mit darauf aufgebrachtem Außenschlauch als Ausschnitt,
- Figur 2: einen entsprechenden Ausschnitt einer zweiten Ausführungsform des Grundschlauchs mit Außenschlauch,
- Figur 3: eine erste Ausführungsform eines Außenbereichsabschnitts eines verstärkten, flexiblen Schlauchs mit Verstärkungsbändern im Querschnitt,
- Figur 4: eine zweite Ausführungsform eines Außenbereichsabschnitts mit Verstärkungsbändern, ebenfalls im Querschnitt,
- Figur 5: eine dritte Ausführungsform eines Außenbereichsabschnitts im Querschnitt,
- Figur 6: eine vierte Ausführungsform eines Außenbereichsabschnitts im Querschnitt und
- Figur 7: eine fünfte Ausführungsform eines Außenbereichsabschnitts im Querschnitt.

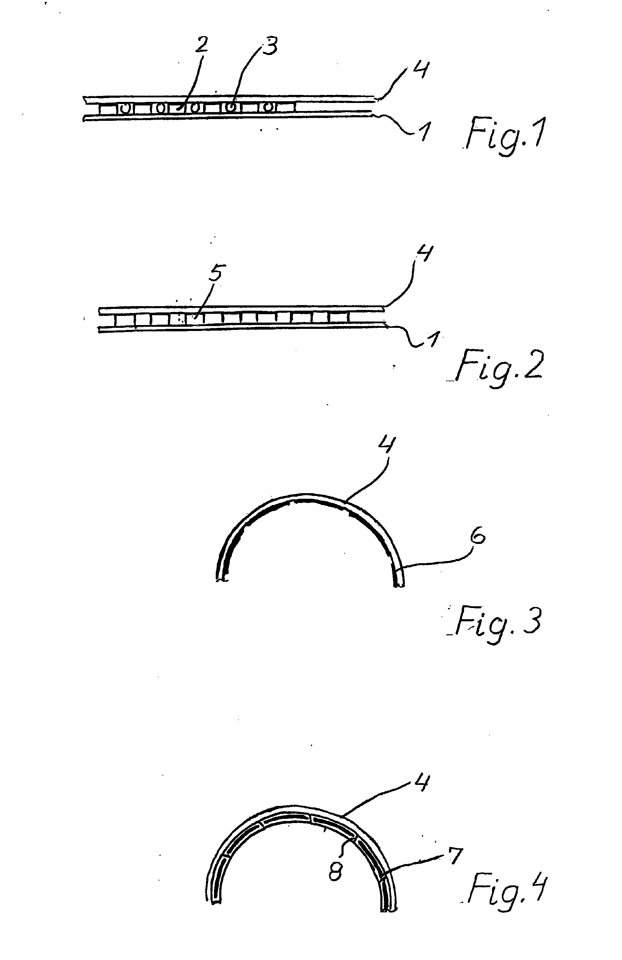

Bei dem Längsschnitt durch eine Wand eines Grundschlauchs in einer bevorzugten Ausführungsform gemäß Figur 1 ist ein mit nicht dargestellten Verstärkungselementen verstärkter, dünnwandiger Innenschlauch mit 1 bezeichnet. Auf diesem sind eine bandförmige Stützwendel 2 aus einem Kunststoff sowie in dem wendelförmigen Zwischenraum der Stützwendel 2 ein Drahtwendel 3, der ebenfalls stützend wirkt, dargestellt. Auf dem derart gebildeten Grundschlauch ist ein Außenschlauch 4 aufgebracht. Die Stützwendel 3 haftet an dem Innenschlauch 1 und an dem Außenschlauch 4. Die Drahtwendel 3 weist keinerlei Haftung auf. Der dargestellte und beschriebene Grundschlauch und Außenschlauch gehört zum Stand der Technik. Dies gilt auch für die Ausführungsform des Grundschlauchs mit Außenschlauch nach Figur 2:

Dieser Grundschlauch mit dem Innenschlauch 1 und nur einer Stützwendel 5 sowie dem Außenschlauch 4 unterscheidet sich von der Ausführungsform gemäß Figur 1 darin, daß keine Drahtwendel vorgesehen ist; statt dessen kann die Stützwendel 5 aus härterem Kunststoff bestehen als die Stützwendel 2 gemäß Figur 1. Die Stützwendeln 2 und 5 sind jeweils bandförmig mit rechteckförmigem Querschnitt des Bandes. Der Grundschlauch gemäß Figur 2 besteht also nur aus dem Innenschlauch 1 und der Stützwendel 5.

In Figur 3 ist dargestellt, wie ein Schlauchaufbau auf der Grundlage eines der Grundschläuche gemäß den Figuren 1 und 2 erfindungsgemäß ergänzt ist durch Verstärkungsbänder 6 aus in Längsrichtung des Schlauchs, d.h. senkrecht zur Papierebene im wesentlichen nicht dehnbarer metallisierter Folie radial unterhalb des Außenschlauchs 4 an dessen Innenwand. Die Verstärkungsbänder 6 sind hier gegenseitig auf Lücke angeordnet. Der Außenschlauch 4 ist über die Verstärkungsbänder, die an der Stützwendel 2 des Grundschlauchs haften, siehe Figur 1 oder 2, extrudiert. In den Lücken kann der Außenschlauch mit der Stützwendel des Grundschlauchs verbunden sein, um die Haftung zwischen diesen Teilen insgesamt zu verbessern.

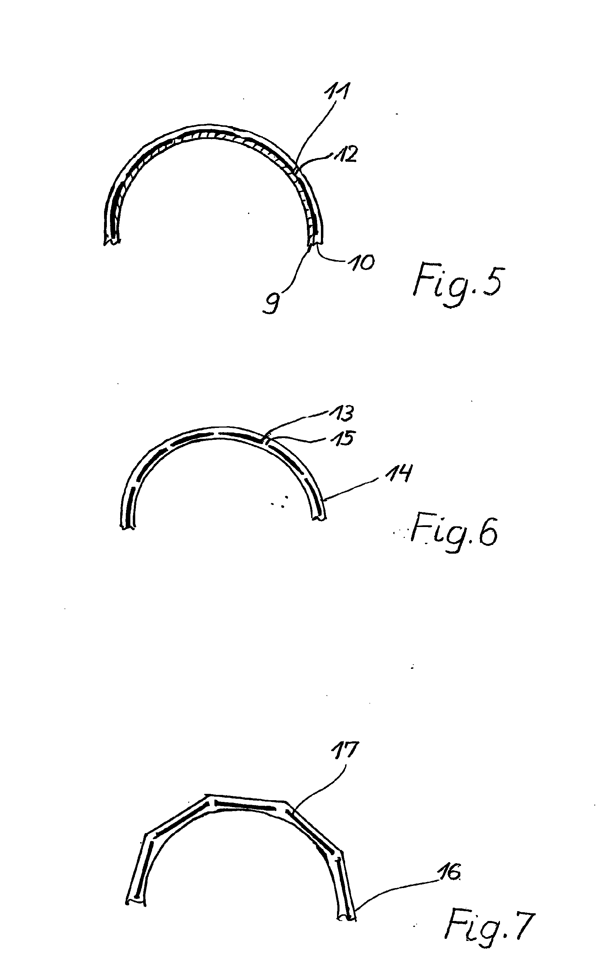

In der Ausführungsform gemäß Figur 4 sind die Verstärkungsbänder 7 mit PVC ummantelt. Die Ummantelung ist mit 8 bezeichnet. Die Ummantelungen 8 der wiederum in Längsrichtung des Schlauchs im wesentlichen nicht dehnbaren metallisierten Verstärkungsbänder 7 stoßen hier dicht aneinander. Sie sind wiederum von einem Außenschlauch 4 umgeben.

Bei der dritten Ausführungsform des verstärkten, flexiblen Schlauchs nach Figur 5 sind zur Vervollständigung des Grundschlauchs ein erster innerer Außenschlauch 9, der schraffiert dargestellt ist, und ein zweiter äußerer Außenschlauch 10 vorgesehen. Hier sind die Verstärkungsbänder 11 wiederum parallel zur Längsachse des Schlauchs zwischen dem ersten Außenschlauch 9 und dem zweiten Außenschlauch 10 angeordnet, und zwar unter Freilassung je einer Lücke zwischen benachbarten Verstärkungsbändern, in denen der erste Außenschlauch 9 und der zweite Außenschlauch 10 direkt aneinander haften. Diese Lücken können daher auch als Stege 12 bezeichnet werden.

In der vierten Ausführungsform gemäß Figur 6 sind die Verstärkungsbänder 13 in nur einen entsprechend dicken Außenschlauch 14 eingebettet, und zwar auf Lücke, so daß wiederum Stege 15 gebildet sind, welche die Einstückigkeit des Außenschlauchs 14 gewährleisten.

In der fünften Ausführungsform gemäß Figur 7 ist ein Außenschlauch 16 gerade prismenförmig mit planen Außenflächen statt der zylindrischen Außenfläche gemäß den ersten bis vierten Ausführungsformen ausgebildet. In dem einstükkigen Außenschlauch 16 sind wiederum in axialer Richtung des Schlauchs im wesentlichen nicht dehnbare, metallisierte Verstärkungsbänder auf Lücke angeordnet, und zwar liegen die Verstärkungsbänder 17 parallel zu der ihnen jeweils am nächsten benachbarten Außenfläche des Außenschlauchs. Die Verstärkungsbänder 17 sind hier also ebenfalls plan, was ihre Handhabung bei der Fertigung erleichtert.

Bei der Herstellung des verstärkten, flexiblen Schlauchs ist wiederum von einem der Grundschläuche gemäß den Figuren 1 und 2 auszugehen, wonach auf einen mit Längsfäden versehenen Innenschlauch eine Stützwendel aus einem Kunststoffband mit rechteckigem Querschnitt aufgewickelt wird. Die Wendel ist an ihrer Oberfläche mit einem durch Hitze aktivierbaren Kleber versehen, der eine Haftung der Wendel am Innenschlauch und dem anschließend aufzubringenden Außenschlauch gewährleistet.

Der weitere Schlauchaufbau kann wie folgt durchgeführt werden:

Der Grundschlauch durchläuft einen Extrusionskopf, der den Grundschlauch mit einem Außenschlauch ummantelt. Bei Einlauf des Grundschlauchs in den Extrusionskopf werden an diesen Verstärkungsbänder angelegt, die gleichmäßig über den Umfang des Grundschlauchs verteilt sind und parallel zur Schlauchachse sowie zueinander auf der Oberfläche des Grundschlauchs zur Anlage gelangen. Dort werden sie durch den aufextrudierten Außenschlauch fixiert. Als Verstärkungsbänder haben sich ca. 3 bis 6 mm breite Folienbänder aus einer zähen, in Längsrichtung kaum dehnbaren und in seiner Falteigenschaft sehr

flexiblen Kunststoffolie einer Dicke von 0,05 bis 0,1 mm, die hochglänzend metallisiert ist, bewährt.

Die aus dieser Kunststoffolie geschnittenen Verstärkungsbänder halten häufigen Biegewechseln stand. Die Metallisierung der Folie wird generell durch Bedampfen der Folie mit Aluminium erzielt. Vor dem Aufbringen auf den Grundschlauch werden die Verstärkungsbänder bzw. die Folie, aus der die Verstärkungsbänder hergestellt sind, noch beiderseitig mit einem transparenten Lack oder Kleber versehen, der die Metallisierung stützt und eine Haftung zu der Stützwendel und dem Außenschlauch gewährleistet.

Im einzelnen werden vor der Ummantelung der auf den Grundschlauch aufgebrachten Verstärkungsbänder in einem Extrusionsvorgang, in dessen Verlauf der mit den Verstärkungsbändern versehene Grundschlauch mit einer Schicht aus sehr weichem transparenten PVC mit einer Shore-Härte von ca. 50 bis 60 in einer Dicke von 0,1 bis 0,2 mm ummantelt wird, die wie oben beschrieben hergestellten ummantelten Verstärkungsbänder mit der glänzenden Seite nach oben auf den vorgewärmten Grundschlauch achsparallel auf Stoß aufgewalzt. In einer Variante werden die Verstärkungsbänder so aufgewalzt, daß die Oberfläche des Grundschlauches vollständig bedeckt ist, die somit nahtlos erscheint. Hierzu können die Verstärkungsbänder an ihrem Rand abgeschrägt sein, so daß sie an den Überlappungsstellen keine Verdickungen ergeben. - Um eine gute Haftung der Verstärkungsbänder auf der Stützwendel sowie untereinander zu gewährleisten, werden die Verstärkungsbänder zusätzlich mit dem gleichen Kleber versehen wie die Stützwendel.

Bei einer Variante des Herstellungsverfahrens wird auf einen Grundschlauch ein erster innerer Außenschlauch extrudiert, der beispielsweise eine Dicke von ca. 0,2 mm aufweist. Auf dessen Außenseite werden in axialer Richtung Verstärkungsbänder aus im wesentlichen nicht dehnbarer, zugfester, metallisierter Folie angelegt, und zwar mit gegenseitigem Abstand in Umfangsrichtung. Darüber wird der transparente zweite (äußere) Außenschlauch extrudiert, der sich

in dem Zwischenraum zwischen den Verstärkungsbändern direkt mit dem ersten Außenschlauch verbinden kann. Die Verstärkungsbänder haften auch hier direkt an dem ersten Außenschlauch und dem zweiten Außenschlauch. Der erste innere Außenschlauch kann so eingefärbt sein, daß der weiter innen liegende Aufbau des Grundschlauches von außen nicht mehr sichtbar ist.

Relativ einfach ist die Herstellung des verstärkten, flexiblen Schlauchs nach einer Variante, bei der auf den Grundschlauch ein Außenschlauch extrudiert wird, in dem bereits die Verstärkungsbänder aus im wesentlichen nicht dehnbarer, zugfester, metallisierter Folie in Längsrichtung und quer dazu in einem Abstand zueinander von mindestens 1 mm rundherum eingebettet sind. Die Verstärkungsbänder laufen auch hier bei der Extrusion des Außenschlauches in das Extrusionswerkzeug ein.

Weiterhin können in einfacher Weise bei der Ausführungsform mit einem prismenförmigen Außenschlauch die metallisierten Verstärkungsbänder in das Extrusionswerkzeug plan, also nicht über ihre Breite gekrümmt, einlaufen, wonach sie sich parallel zu den planen Oberflächenbereichen des Außenschlauchs in diesen orientieren und in dem Außenschlauch eingebettet werden.

### Bezugszahlenliste

- 1: Innenschlauch
- 2: Stützwendel
- 3: Drahtwendel
- 4: Außenschlauch
- 5: Stützwendel
- 6: Verstärkungsbänder
- 7: Verstärkungsbänder
- 8: Ummantelung (PVC)
- 9: 1. Außenschlauch
- 10: 2. Außenschlauch
- 11: Verstärkungsband
- 12: Stege
- 13: Verstärkungsbänder
- 14: Außenschlauch
- 15: Stege
- 16: Außenschlauch
- 17: Verstärkungsbänder

## Patentansprüche

1. Verstärkter, flexibler Schlauch, insbesondere Brauseschlauch, mit einem dünnwandigen, mit Verstärkungen versehenen Innenschlauch (1), mindestens einem äußeren Außenschlauch (4, 10, 14, 16), mindestens einer Stützwendel (2) zwischen Innenschlauch und Außenschlauch sowie mit in Achsrichtung des Schlauchs verlaufenden Verstärkungsbändern (6, 7, 11, 13, 17) radial außerhalb der Stützwendel (2), wobei die Verstärkungsbänder mit benachbarten Teilen des Schlauchs verbunden sind,
**dadurch gekennzeichnet,**
**daß** die Verstärkungsbänder (6, 7, 11, 13, 17) aus einer im wesentlichen nicht dehnbaren, hochglänzend metallisierten Folie bestehen und, in dem Bereich radial zwischen einer Oberseite der Stützwendel (2) und unterhalb einer äußeren Oberfläche des äußeren Außenschlauchs (4, 10, 14, 16) angeordnet sind.

2. Verstärkter, flexibler Schlauch nach Anspruch 1,
**dadurch gekennzeichnet,**
**daß** die Verstärkungsbänder (6, 7, 11, 13, 17) aus Polyester bestehen.

3. Verstärkter, flexibler Schlauch nach Anspruch 1 oder 2,
**dadurch gekennzeichnet,**
**daß** die metallisierte Folie beidseitig mit einer transparenten Lackschicht versehen ist.

4. Verstärkter, flexibler Schlauch nach Anspruch 1 oder 2,
**dadurch gekennzeichnet,**
**daß** die Verstärkungsbänder (6, 7, 11, 13, 17) mit einem transparenten Kleber beidseitig angeklebt sind.

5. Verstärkter, flexibler Schlauch nach Anspruch 1 oder 2,
**dadurch gekennzeichnet,**
**daß** die Verstärkungsbänder (7) mit PVC ummantelt sind.

6. Verstärkter, flexibler Schlauch nach Anspruch 1 oder 2,
**dadurch gekennzeichnet,**
**daß** die Verstärkungsbänder (6, 7) zwischen der Stützwendel (2) und einer inneren Oberfläche des Außenschlauchs (4) angeordnet und mit diesen verklebt sind.

7. Verstärkter, flexibler Schlauch nach Anspruch 1 oder 2,
**dadurch gekennzeichnet,**
**daß** die Verstärkungsbänder (11) zwischen einem ersten inneren Außenschlauch und dem zweiten äußeren Außenschlauch (10) radial außerhalb des ersten Außenschlauchs (9) angeordnet sind.

8. Verstärkter, flexibler Schlauch nach Anspruch 1 und ggf. mindestens einem der Ansprüche 2 bis 4,
**dadurch gekennzeichnet,**
**daß** die Verstärkungsbänder (13, 17) in den Außenschlauch (14, 16) eingebettet sind.

9. Verstärkter, flexibler Schlauch nach Anspruch 8,
**dadurch gekennzeichnet,**
**daß** die Oberfläche des Außenschlauchs (16) prismenförmig mit mehreren ebenen Außenflächen ausgeformt ist, parallel zu denen die Verstärkungsbänder (17) plan ausgerichtet sind.

10. Schlauch nach den vorangehenden Ansprüchen,
**dadurch gekennzeichnet,**
**daß** zwischen den Verstärkungsbändern in Längsrichtung des Schlauchs verlaufende Lücken frei bleiben.

11. Verstärkter, flexibler Schlauch nach einem der Ansprüche 1 bis 9,
**dadurch gekennzeichnet,**
**daß** in Längsrichtung verlaufenden Verstärkungsbänder auf Stoß aneinandergesetzt sind.

12. Verstärkter, flexibler Schlauch nach den vorangehenden Ansprüchen,
**dadurch gekennzeichnet,**
**daß** die Verstärkungsbänder 0,05 bis 0,1 mm dick und ca. 3 bis 6 mm breit sind.

13. Verstärkter, flexibler Schlauch nach einem der vorangehenden Ansprüche,
**dadurch gekennzeichnet,**
**daß** jedes Verstärkungsband eine Zugfestigkeit von mindestens 10, vorzugsweise 14 Newton bei einer Dicke von 0,075 mm und einer Breite von 3 mm aufweist.
